**Europäisches Patentamt**

**European Patent Office**

**Office européen des brevets**

(19)

(11) Veröffentlichungsnummer: **0 110 923 B1**

(12)

# EUROPÄISCHE PATENTSCHRIFT

(45) Veröffentlichungstag der Patentschrift:
17.09.86

(51) Int. Cl.⁴: **H 04 N 1/10, G 06 K 7/10**

(21) Anmeldenummer: **83901708.4**

(22) Anmeldetag: **27.05.83**

(86) Internationale Anmeldenummer:
**PCT/EP 83/00133**

(87) Internationale Veröffentlichungsnummer:
**WO 83/04160 (08.12.83 Gazette 83/28)**

(54) **EINRICHTUNG ZUM ABTASTEN UND SPEICHERN DER BILDINFORMATION EINER FLÄCHIGEN VORLAGE.**

(30) Priorität: **27.05.82 DE 3220016**

(43) Veröffentlichungstag der Anmeldung:
**20.06.84 Patentblatt 84/25**

(45) Bekanntmachung des Hinweises auf die Patenterteilung:
**17.09.86 Patentblatt 86/38**

(84) Benannte Vertragsstaaten:
**DE FR GB NL SE**

(56) Entgegenhaltungen:
**EP - A - 0 016 400**
**EP - A - 0 031 502**
**FR - A - 2 164 394**
**GB - A - 2 030 824**
**US - A - 3 993 865**
**US - A - 37 390 095**

**Funkschau, vol. 44, issue 21, November 1972, München (DE) R.D. DEnnewitz: "Wes 2-ein Wetterbild-Empfangssystem aus der DDR"" pages 781-782**

(73) Patentinhaber: **DORNER, Jörg, Landwehrstrasse 37, D-8000 München (DE)**

(72) Erfinder: **DORNER, Jörg, Landwehrstrasse 37, D-8000 München (DE)**

(74) Vertreter: **Dorner, Jörg, Dr.-Ing., Dorner & Hufnagel Patentanwälte Ortnitstrasse 20, D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung betrifft eine Einrichtung zur Herstellung einer optisch bzw. elektronisch oder magnetisch gespeicherten Bildinformation einer im wesentlichen flächigen Vorlage mit den Merkmalen des Oberbegriffes des anliegenden Anspruches 1.

Einrichtungen dieser Art sind aus der US-Patentschrift 3993865 bekannt. Die mit der Abtastvorrichtung unter Hinwegführen derselben über die flächige Vorlage bei der bekannten Einrichtung eingesammelten Bildinformationen werden den Speichermitteln mit einer durch die Geschwindigkeit des Hinwegführens der Abtastvorrichtung über die Vorlage vorgegeben, gegebenenfalls veränderlichen Taktgeschwindigkeit den Speichermitteln zugeführt. Um eine Verzerrung der gespeicherten Bildinformation bei der Wiedergabe zu verhindern, muss die Bedienungsperson mit grossem Geschick die Abtastvorrichtung senkrecht zur Zeilenrichtung geradeführen oder muss sich besonderer Hilfsmittel, etwa eines Leitlineals, bedienen, wodurch der Gebrauch der bekannten Einrichtung erschwert wird und in vielen Fällen bei der Wiedergabe nur ein Bild minderer Qualität erhalten wird.

Ganz allgemein ist festzustellen, dass herkömmliche Kopiergeräte den Nachteil haben, dass die Vorlage in bestimmter Weise gehandhabt werden muss, um von Abtastvorrichtungen oder Aufnahmevorrichtungen der bekannten Kopiergeräte erfasst zu werden. Die allgemein bekannten photographischen Apparate nehmen eine augenblickliche Reproduktion vor und ermöglichen nicht die Abtastung einer Vorlage zum Zwecke einer wirtschaftlichen günstigen, hinsichtlich Aufnahmeoptik und Objektbeleuchtung problemlosen Wiedergabe der Vorlage.

Durch die Erfindung soll die Aufgabe gelöst werden, eine optisch bzw. elektronisch oder magnetisch gespeicherte Bildinformation entsprechend einer im wesentlichen flächigen Vorlage in der Weise speichern zu können, dass es weder auf eine besondere Handhabung der Vorlage noch auf eine besonders geschickte Handhabung einer Abtastvorrichtung ankommt, wobei auch der für eine photographische Reproduktion erforderliche Aufwand vermieden werden soll.

Diese Aufgabe wird erfindungsgemäss dadurch gelöst, dass bei einer Einrichtung der eingangs erwähnten Art an der Abtastvorrichtung mindestens ein weiterer Signalgenerator angeordnet ist, welcher eine ungleichförmige Bewegung der Abtastvorrichtung gegenüber der Vorlage meldende Steuersignale an die Speichermittel liefert.

Aufgrund des Vorhandenseins von zwei Signalgeneratoren an der Abtastvorrichtung wird eine Korrektur der Einspeicherung praktisch in zwei Dimensionen, bezogen auf die Ebene der Vorlage, ermöglicht.

Die Erfindung verwirklicht vornehmlich bei der Herstellung der optisch bzw. elektronisch oder magnetisch gespeicherten Bildinformation ein Staubsaugerprinzip, gemäss welchem mittels einer geeigneten Abtastvorrichtung von Hand die Information von der Vorlage gleichsam abgesaugt und in eine Speichereinrichtung eingelesen oder eingespeichert wird.

Bei herkömmlichen Kopierverfahren muss eine Vorlage entweder auf eine Auflageplatte derart aufgelegt werden, dass die informationshaltige Fläche der Vorlage einer Abtastvorrichtung zugekehrt ist, welche innerhalb des betreffenden Gerätes angeordnet und bezüglich einer Abtastbewegung zwangsgeführt ist, oder die Vorlage muss in eine Vorschubeinrichtung eingeführt werden, welche die Vorlage an einer Abtastvorrichtung oder Abtastoptik vorbeiführt. Die Erfindung vermeidet diese Techniken, um die Vorlage zu schonen und den Bedienungskomfort von Kopiergeräten zu erhöhen. Dies wird besonders augenfällig bei der Anfertigung von Kopien aus dicken Büchern und aus umfangreichen Akten. Einrichtungen der hier vorgeschlagenen Art gestatten die Kopiefertigung nach dem bereits erwähnten Staubsaugerprinzip aus Akten, ohne dass ein Ausheften einzelner Blätter notwendig ist, um das Blattformat vollständig kopieren zu können.

In den anliegenden Ansprüchen ist eine Anzahl vorteilhafter Ausgestaltungen und Weiterbildungen des vorstehend dargelegten Grundprinzips beschrieben. Der Inhalt dieser Ansprüche wird hierdurch ausdrücklich zum Bestandteil der Beschreibung gemacht, ohne an dieser Stelle den Wortlaut zu wiederholen. Es sei jedoch hier bemerkt, dass ein wesentlicher Gedanke darin zu sehen ist, dass bei einer Einrichtung der hier vorgeschlagenen Art die Abtastvorrichtung von Hand über die Vorlage hinweggeführt werden kann, ohne dass eine Zwangsführung vorgesehen ist, während die Speicherung der Bildinformationen, gegebenenfalls nach Zwischenspeicherung, so korrigiert wird, dass ein der Vorlage entsprechendes Bild in Gestalt des Inhaltes eines elektronischen Speichers oder in Gestalt einer Bildaufzeichnung rekonstruiert werden kann, auch wenn die Abtastbewegung unregelmässig war.

Nachfolgend werden Ausführungsbeispiele unter Bezugnahme auf die Zeichnung näher erläutert. Es stellen dar:

Fig. 1 eine Einrichtung zur Herstellung einer optisch bzw. elektronisch oder magnetisch gespeicherten Bildinformation mit einer Abtasteinrichtung, einer Speichereinrichtung und einem Funk-Informationsübertragungskanal zwischen diesen Bauteilen;

Fig. 2 eine Einrichtung der in Fig. 1 gezeigten Art mit einem Kabel-Informationsübertragungskanal zwischen der Abtastvorrichtung und den Speichermitteln;

Fig. 3 eine Einrichtung zur Herstellung einer magnetisch gespeicherten Bildinformation, bei welcher die Speichermittel beispielsweise in Gestalt einer Magnetbandkassette innerhalb der ortsveränderlichen Baueinheit der Abtastvorrichtung untergebracht sind;

Fig. 4 eine Einrichtung, bei der die Abtastgeschwindigkeiten mittels zweier Messeinrichtungen ermittelt werden, um bei der Einspeicherung der Bildinformationen ein ungleichmässiges oder schräges Führen der Abtastvorrichtung zu berücksichtigen;

Fig. 5 eine Abbildung einer derjenigen von Fig. 4 ähnlichen Einrichtung, deren Abtastvorrichtung als auf eine unregelmässige Abtastbewegung ansprechende Organe Beschleunigungsfühler enthält;

Fig. 6 eine schematische perspektivische Ansicht eines Teiles eines Abtastkopfes der Abtastvorrichtung mit Lichtleitern zur Übertragung von Bildpunktinformationen entweder zu den Speichermitteln oder zu optisch-/elektronischen Wandlern;

Fig. 7 ein Blockschaltbild von Speichermitteln, in denen die von der Abtastvorrichtung gewonnenen Bildinformationen einem Speicher über einen Puffer zuführbar sind, um Zeit für die Korrektur entsprechend einer unregelmässigen Abtastbewegung zu gewinnen;

Fig. 8 ein Blockschaltbild von Speichermitteln, in denen die von der Abtastvorrichtung gewonnenen Bildinformationen einem Speicher zuführbar sind, nachdem eine Zwischenspeicherung der abgetasteten Bildinformationen und eine Zwischenspeicherung von aus der Abtastgeschwindigkeit abgeleiteten Adressensignalen erfolgte, und

Fig. 9 eine schematische perspektivische Ansicht von photoelektrischen Speichermitteln mit Vorrichtungen zur Korrektur einer unregelmässigen Bewegung der Abtastvorrichtung.

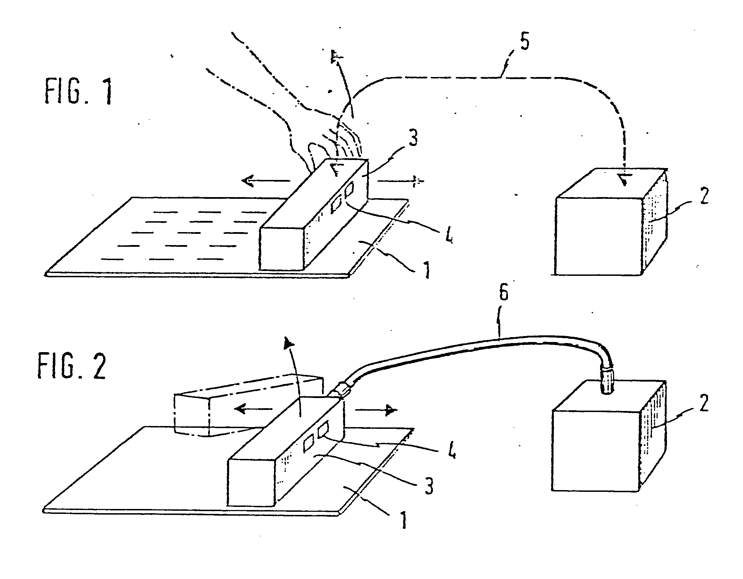

In Fig. 1 ist eine flächige Vorlage schematisch dargestellt und mit 1 bezeichnet. Die Bildinformation dieser Vorlage soll in Speichermitteln 2 photoelektrisch bzw. optisch oder magnetisch oder elektrisch gespeichert werden. Eine optische Speicherung der Bildinformation liegt beispielsweise in einer Kopie auf einem Trägermaterial, beispielsweise auf Papier, vor. Eine elektronische Speicherung kann mittels einer Speichermatrix aus Halbleiterelementen vorgenommen werden. Eine magnetische Speicherung kann auf einer Magnetplatte oder einem Magnetband geschehen.

Zur Abtastung oder Abnahme der Bildinformation von der Vorlage dient eine Abtastvorrichtung 3, welche von Hand auf die Vorlage 1 aufsetzbar und über die Vorlage hinwegführbar ist, um die Bildinformationen von der Vorlage 1 abzunehmen. An der Abtastvorrichtung vorgesehene Bedienungstasten 4 dienen zum Einschalten der gesamten Einrichtung und zur Auslösung des Aufzeichnungsvorganges.

Die von der Vorlage abgenommenen Bildinformationen werden von der Abtastvorrichtung 3 aus zu den ortsfest aufgestellten Speichermitteln über einen Informationsübertragungskanal 5 übertragen, welcher bei der Ausführungsform nach Fig. 1 die Gestalt eines drahtlosen Funkübertragungskanals hat, derart, dass in der Abtastvorrichtung 3 ein Sender und am Orte der Speichermittel 2 ein Empfänger untergebracht sind, welche bei den hier im allgemeinen in Betracht kommenden geringen Entfernungen zwischen Sender und Empfänger vergleichsweise kleine Leistung haben können.

Der drahtlose Funkübertragungskanal 5 gestattet eine im wesentlichen beliebige Bewegung der Abtastvorrichtung 3 relativ zu den Speichermitteln und etwaigen weiteren Einrichtungen, so dass die als handliche Baueinheit ausgebildete Abtastvorrichtung zur Abtastung der Vorlage bewegt werden kann, während die Vorlage an ihrem ursprünglichen Ort verbleibt und nicht in eine Einrichtung, insbesondere eine Kopiereinrichtung, eingelegt, auf diese aufgelegt oder in ähnlicher Weise gehandhabt werden muss.

Bei der Ausführungsform nach Fig. 2 hat der eine im wesentlichen beliebige Relativbewegung zwischen der Abtastvorrichtung und den Speichermitteln zulassende Informationsübertragungskanal die Gestalt eines flexiblen Hochfrequenzsignal-Übertragungskabels 6, welches von der Abtastvorrichtung 3 zu den Speichermitteln 2 führt. Im übrigen sind bei der Ausführungsform nach Fig. 2 Aufbau und Wirkungsweise ähnlich wie bei der Ausführungsform nach Fig. 1.

In den Abtastvorrichtungen der Ausführungsformen nach den Fig. 1 und 2 werden während des Hinwegführens der Abtastvorrichtung von Hand über die Vorlage hin mittels einer Reihe lichtempfindlicher Abtastorgane entsprechend dem Bild der Vorlage das Vorhandensein oder das Fehlen von Lichtimpulsen festgestellt und entsprechende elektrische Signale gebildet. Diese Signale werden beispielsweise seriell über den Informationsübertragungskanal 5 bzw. 6 zu den Speichermitteln übertragen und dort in bestimmter Ordnung gespeichert. Die Speicherordnung bestimmt sich zum einen durch die Lage der einzelnen Abtastorgane in einer Reihe nebeneinander entsprechend einer abzutastenden Zeile der Vorlage sowie durch den Abtastweg der Abtastvorrichtung über die Vorlage hin, wobei einzelne Abtastorgane längs einer Spalte der Vorlage bewegt werden, wenn eine entsprechend präzise Führung der Abtastvorrichtung 3 erreicht wird.

Wird jedoch die Abtastvorrichtung 3 von einer Bedienungsperson nicht präzise parallel geführt, nicht präzise mit gleichbleibender Geschwindigkeit geführt und auch möglicherweise in Zeilenrichtung etwas verschoben, so ist die in den Speichermitteln vorgenommene Aufzeichnung der Bildinformation entsprechend verzerrt und bedarf einer Entzerrung in Übereinstimmung mit Informationen, welche ebenfalls über den Informationsübertragungskanal 5 bzw. 6 übertragen werden und welche durch geeignete, auf der Abtastvorrichtung 3 befindliche Messeinrichtungen eingesammelt werden, die auf die Bewegung der Abtastvorrichtung 3 ansprechen. Auf Einzelheiten wird diesbezüglich weiter unten näher eingegangen werden.

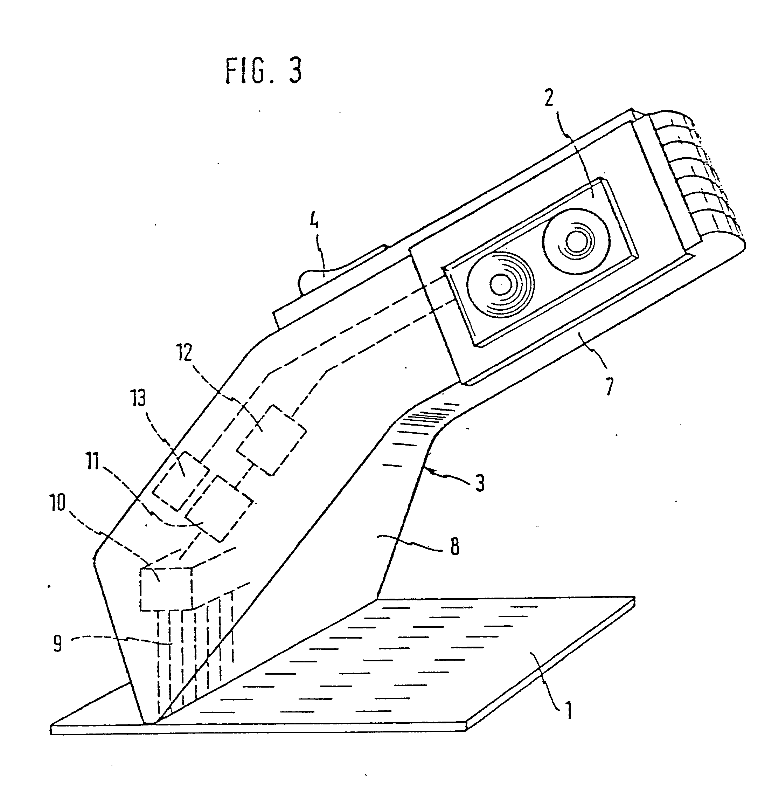

Können die Speichermittel 2 sehr leicht ausgeführt werden, was insbesondere dann der Fall ist, wenn diese Speichermittel nicht Gestalt eines elektrophotographischen Aufzeichnungsmechanismus mit Koronaladestation, Belichtungsstation, Tonerentwicklungsstation und Fixierungsstation haben, sondern zwecks raumsparender Zwischenspeicherung beispielsweise eine Magnetbandspeicherung vorsehen, so können die Speichermittel auf der Abtastvorrichtung 3 mitgeführt werden, wie dies schematisch in Fig. 3 gezeigt ist. Hier haben die Speichermittel die Gestalt einer Magnetband-Aufnahmeeinrichtung mit Magnetbandkassette, welche beispielsweise in einem Griffteil 7 der Abtastvorrichtung einsetzbar und wieder entnehmbar untergebracht ist. Nach Speicherung der Bildinformationen in der Magnetbandkassette der Speichermittel 2 wird die Magnetbandkassette aus der Vorrichtung 3 entnommen und in eine Wiedergabeeinrichtung eingesetzt, um in dieser die Herstellung einer Reproduktion der Bildinformationen zu steuern.

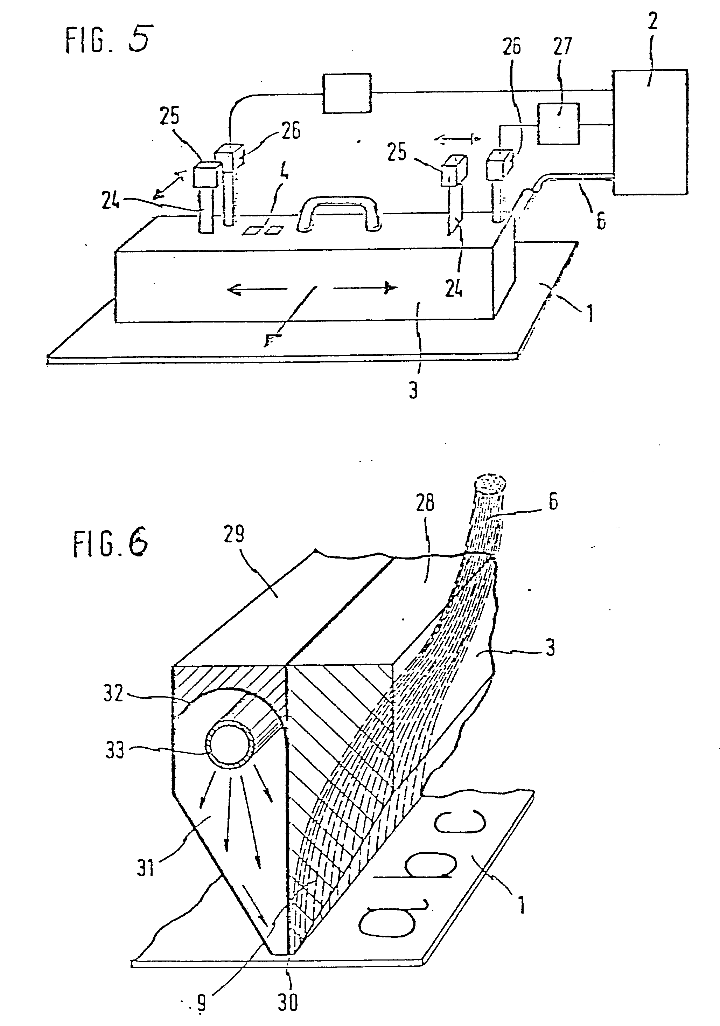

Die Abtastvorrichtung 3 enthält in einer sich quer über die Breite der Vorlage 1 erstreckenden Abtastleiste 8 eine Vielzahl sich in einer Ebene nebeneinander und parallel zueinander erstreckender Lichtleiterfasern 9, wobei die genannte Ebene in der Gebrauchslage der Vorrichtung etwa normal zur Ebene der Vorlage 1 gehalten wird. In der Abtastvorrichtung 3 kann ausserdem eine Beleuchtungsvorrichtung vorgesehen sein, welche etwa in der in Fig. 6 schematisch angedeuteten Art ausgebildet ist und welche dazu dient, die Vorlagenoberfläche derart auszuleuchten, dass je nach Bildinformationsgehalt der Vorlagenoberfläche die nach unten weisenden Enden der Lichtleiterfasern 9 jeweils unterschiedlich mit Lichtenergie beaufschlagt werden.

Die Lichtleiterfasern 9 führen zu einer Umformereinheit 10, in der von den von der Vorlagenoberfläche abliegenden Enden der Lichtleiterfasern Lichtimpulse abnehmbar und beispielsweise photoempfindlichen Schaltmitteln zuführbar sind, wobei jeweils ein photoempfindliches Schaltorgan je einer Lichtleiterfaser zugeordnet ist und je einem Lichtimpuls entsprechende elektrische Signale abzugeben vermag.

Zur Erzielung einer ausreichenden Auflösung bei der Abtastung der Vorlage 1 ist es erforderlich, Lichtleiterfasern 9 sehr geringen Durchmessers zu verwenden, welche gegeneinander optisch isoliert sind. Die Lichtleiterfasern können in einen Kunstharzträger eingegossen sein oder zwischen zwei Trägerhälften eingekittet sein. Ein ausreichender Abstand zwischen den von der Vorlagenoberfläche abliegenden Lichtleiterenden derart, dass die damit zu koppelnden photoempfindlichen Schaltorgane nebeneinander Platz finden, kann durch Auffächern der Lichtleiterenden oder durch eine gruppenweise Längenstaffelung der Lichtleiterfasern 9 erreicht werden.

Die photoempfindlichen Schaltorgane können mit ihrem die elektrischen Signale darbietenden Ausgang jeweils an ein zugehöriges Kurzzeit-Speicherorgan angeschlossen sein, derart, dass die den optischen Impulsen entsprechenden elektrischen Signale der photoempfindlichen Schaltorgane von einem mit hoher Geschwindigkeit arbeitenden Multiplexer 11 in einer dem Zeilenfortschritt entsprechenden wiederkehrenden Folge anwählbar und nach Verstärkung in einem Verstärker 12 seriell in der Magnetband-Aufzeichenvorrichtung zusammen mit in geeigneter Weise eingegebenen Zeilenfortschaltsignalen registrierbar sind.

Es sei an dieser Stelle darauf hingewiesen, dass bei denjenigen Ausführungsformen der hier vorgeschlagenen Einrichtung, bei denen eine Abtastvorrichtung 3 von Hand über ein Format der Vorlage 1 hinweggeführt wird, die Abtastgeschwindigkeit in Zeilenrichtung so rasch erfolgt, dass bei den praktisch auftretenden Hinwegführgeschwindigkeiten der Abtastvorrichtung über die Vorlage hin die Abtastung der jeweils nächstfolgenden Zeilen von Bildpunkten in einem Abstand von der Abtastung der vorausgehenden Bildpunktzeile geschieht, der zu einer ausreichenden Auflösung in Richtung der Vorschubbewegung der Abtastvorrichtung führt. Zur Verminderung der Abtastgeschwindigkeit von Bildpunkt zu Bildpunkt bei Aufrechterhaltung einer hohen Auflösung kann es vorteilhaft sein, die einzelnen, von auf der Abtastvorrichtung 3 in Zeilenrichtung nebeneinanderliegenden Abtastorganen oder Abtastpunkten abnehmbaren Signale zu den Speichermitteln 2 parallel zu übertragen. Nur am Rande sei hier bemerkt, dass diese Art und Weise der Signalübertragung etwa bei der Ausführungsform nach Fig. 6 vorliegt, bei der das Übertragungskabel 6 von einem flexiblen Bündel von Lichtleiterfasern gebildet ist.

Nachdem die Magnetbandkassette im allgemeinen durch einen Bandantrieb unveränderlicher Geschwindigkeit angetrieben wird, ist es erforderlich, bei der Reproduktion der gespeicherten Bildinformationen in der zuvor bereits angedeuteten Weise eine ungleichförmige Abtastbewegung der Abtastvorrichtung 3 über die Vorlage 1 hinweg zu korrigieren. Zu diesem Zwecke ist in der Abtastvorrichtung 3 eine Messvorrichtung 13 enthalten, welche Messsignale bildet, die der Bewegungsgeschwindigkeit der Vorrichtung 3 über die Vorlage hinweg aufgrund einer entsprechenden manuellen Betätigung durch die Bedienungsperson entsprechen oder in der jeweiligen Stellung der Abtastvorrichtung 3 auf dem Format der Vorlage 1 entsprechen, wozu eine entsprechende Integration von Geschwindigkeitsmesssignalen notwendig ist. Vermag die Messeinrichtung 13 lediglich der Beschleunigung entsprechende Messsignale abzugeben, so ist eine zweimalige Integration erforderlich, um die Stellungssignale zu erhalten.

Die der Abtastgeschwindigkeit oder der jeweiligen Abtaststellung entsprechenden elektrischen Signale, welche vom Ausgang der Messeinrichtung 13 abgenommen oder abgeleitet werden, gelangen auf einer Zusatzspur der Speichermittel 2 oder auf einem gesonderten Speicher zur Aufzeichnung, welcher zusammen mit den Speichermitteln 2 aus der Vorrichtung 3 zu entnehmen und in eine Wiedergabeeinrichtung einzusetzen ist, um dort die Reproduktion der zwischengespeicherten Bildinformationen unter Korrektur etwaiger ungleichförmiger Abtastbewegungen zu steuern.

Es sei hier bemerkt, dass die Ausführungsform nach Fig. 3 insofern nicht mit mobilen Kopiergeräten vergleichbar ist, welche von Hand über die Vorlage hinwegführbar sind und welche sogleich eine Kopie der Vorlage liefern, als durch Entnahme des Zwischenspeicherorgans der Speichermittel aus der Abtastvorrichtung 3 bei der hier vorgeschlagenen Vorrichtung und Transport zu einer Wiedergabestation, welche ortsfest aufgestellt ist, der hier offenbarte Grundgedanke verwirklicht ist, eine durch Vorlagenabtastung eingesammelte Bildinformation unabhängig von der Lage der Abtastvorrichtung in einer ortsfest aufgestellten Baueinheit ohne die von Sofortbildkameras bekannte Formatbeschränkung auszuwerten, wobei diese Baueinheit durch ihren Raumbedarf und ihr Gewicht nicht die Abtastvorrichtung selbst belastet.

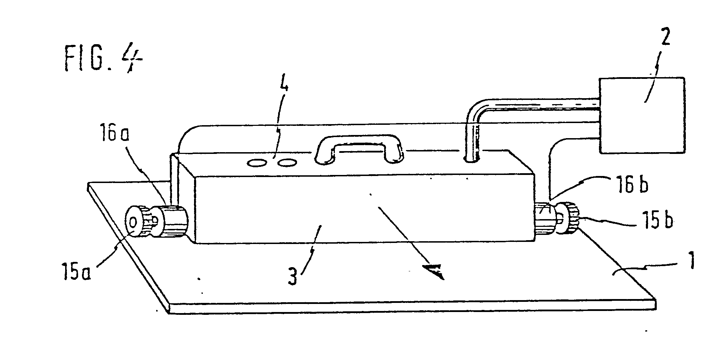

Sollen Führungsmittel zur Parallelführung der Abtastvorrichtung 3 vermieden werden, so sind bei der Zwischenspeicherung oder bei der endgültigen Abspeicherung der Bildinformationen Korrekturen von Verzerrungen vorzunehmen, die sich aus einem ungleichen Vorschub der rechten und der linken Seite der Abtastvorrichtung 3 ergeben. Zu diesem Zwecke müssen diese jeweils gegebenenfalls unterschiedlichen Vorschubgeschwindigkeiten gemäss Fig. 4 durch Tachometer 16a und 16b sowie diese antreibende und auf der Vorlagenoberfläche aufliegende Reibräder 15a bzw. 15b gemessen werden. Durch Integration der Ausgangssignale der Tachometer 16a und 16b erhält man die jeweilige Stellung des rechten und des linken Endes der Abtasteinrichtung 3. Hieraus lässt sich mittels eines Mikroprozessors in vergleichsweise einfacher Art und Weise die jeweilige augenblickliche Winkellage der Abtastvorrichtung 3 relativ zu einer Seitenkante der Vorlage 1 berechnen.

Soll nach Auslösung des Abtastvorganges mittels der Vorrichtung 3 durch Betätigung einer der Tastschalter 4 und Beginn der Abtastbewegung durch Hinwegführen der Abtastvorrichtung 3 an einem Handgriff über die Vorlage 1 hinweg die jeweilige augenblickliche Stellung der Abtastvorrichtung mit Bezug auf eine Anfangslage festgehalten werden, und zwar nicht nur mit Bezug auf die Zeilenfortschrittrichtung, sondern auch mit Bezug auf eine Richtung parallel zur einzelnen Zeile sowie im Winkel zur Vorlagenzeile, so ist gemäss Fig. 5 auf der Vorrichtung zweckmässig ein Messsystem mit einer sogenannten Trägheitsplattform angeordnet, die hier zweidimensional wirksam ist. Im einzelnen sind an Berylliumbronzefedern 24, welche sich im elastischen Bereich im wesentlichen ohne Hysteresis verformen, mit Bezug auf eine Auslenkrichtung in Zeilenfortschrittrichtung bzw. parallel zur Zeilenrichtung beweglich träge Massen 25 gehaltert. Den trägen Massen stehen Näherungsfühler 26 gegenüber, welche auf die Entfernung zu den trägen Massen 25 kapazitiv oder induktiv ansprechen und abhängig von einer Auslenkung der trägen Massen 25 an den Blattfedern 24 relativ zu einem Gehäuseteil der Abtastvorrichtung 3 und damit abhängig von der Beschleunigung der Vorrichtung 3 relativ zur Vorlage 1 Ausgangssignale an Integratoren 27 liefern. Die Integratoren 27 nehmen eine zweifache Integration der Beschleunigungssignale vor, um der jeweiligen augenblicklichen Stellung der Abtastvorrichtung 3 auf der Vorlage 1 entsprechende Signale zur Verfügung zu stellen, welche in den Speichermitteln 2 zur Steuerung der Einspeichergeschwindigkeit oder der jeweiligen Speicheradresse für die Bildinformationssignale dienen, welche über den Informationsübertragungskanal 6 von der Einrichtung 3 an die Speichermittel 2 weitergegeben werden. Die aus den Bauteilen 24 bis 26 gebildeten Beschleunigungsfühler arbeiten mit ausserordentlich hoher Präzision und Geschwindigkeit, wobei im Falle eines kapazitiven Näherungsfühlers 26 die Kapazität zu der trägen Masse 25 hin zur Verstimmung eines Präzisions-Schwingkreises dient, von dessen Frequenz das Ausgangssignal abzuleiten ist.

Fig. 6 zeigt einen optischen Abtastkopf der Abtastvorrichtung 3 mit einer Anordnung in geringem Abstand parallel zueinander angeordneter, in einer Ebene liegender Lichtleiterfasern 9, welche aus der Parallellage im Bereich der Abtastnase herausgeführt im Gegensatz zu der Vorrichtung nach Fig. 3 nicht zu optisch-elektrischen Wandlern verlaufen, sondern zu dem flexiblen Informationsübertragungskabel 6 zusammengefasst sind, wie in Fig. 6 durch unterbrochene Linien deutlich gemacht ist. Am Orte der Speichermittel werden die Lichtleiterfasern zu einem Ausgangs-Abtastkopf in einer Ordnung aufgefächert, welche derjenigen in der Abtastvorrichtung 3 entspricht. Die auf Seite der Speichermittel 2 befindlichen Enden der Lichtleiterfasern 9 dienen zur Belichtung eines unter diesen Enden gegebenenfalls unter Zwischenschaltung einer Optik hindurchgeführten elektrographischen Aufzeichnungsmaterials, welches zuvor in an sich bekannter Weise an einer Korona-Aufladungsstation vorbeigeführt wurde und welches nach der Belichtung an einer Tonerentwicklungsstation und einer Fixierungsstation oder einer Übertragungsstation zur Übertragung des Tonerbildes auf einen Träger, etwa auf Papier, vorbeiläuft.

Die Parallelanordnung von Lichtleiterfasern 9, welche gegeneinander optisch isoliert sind, ist zwischen zwei Trägerhälften 28 und 29 eingebettet oder eingekittet, welche in der Gebrauchslage nach unten zu aufeinander hin keilförmig verjüngt sind, so dass eine Abtastnase 30 gebildet ist, in deren Spitze die der Vorlage 1 zugekehrten Enden der Lichtleiterfasern 9 ausmünden. Unmittelbar neben der Mündung der Lichtleiterfasern 9 befindet sich die schlitzartige Ausmündung einer Beleuchtungskammer 31, welche nach oben zu durch ein Reflektorprofil 32 abgeschlossen ist und welche an ihren Innenwandungen mit Ausnahme eines zur Vorlage 1 hin sich öffnenden Schlitzes mit Reflexionsbelägen versehen ist. In der Beleuchtungskammer 31 befindet sich eine Leuchtstoffröhre 33, welche während der Abtastung der Vorlage 1 eingeschaltet ist und welche die Aufgabe hat, die Vorlage in dem den unteren Enden der Lichtleiterfasern 9 benachbarten Bereich auszuleuchten. Wandern also unter einem Ende einer Lichtleiterfaser in dem ausgeleuchteten Bereich dunkel erscheinende Informationselemente hinweg, so wird die Lichtenergiebeaufschlagung der betreffenden Lichtleiterfaser unterbrochen und ein entsprechendes Signal an die Speichermittel bzw. die Aufzeichnungseinrichtungen dieser Speichermittel übertragen.

Gemäss einer in den Zeichnungen nicht gezeigten Ausführungsform können die Lichtleiterfasern 9 sowohl für die Hinleitung als auch für die Rückleitung des Lichtes verwendet werden, so dass die Lichtleiterfasern nicht nur zur Ableitung des von den Bildinformationselementen reflektierten Lichtes dienen, sondern auch die Ausleuchtung der Vorlagenoberfläche bereichsweise vornehmen.

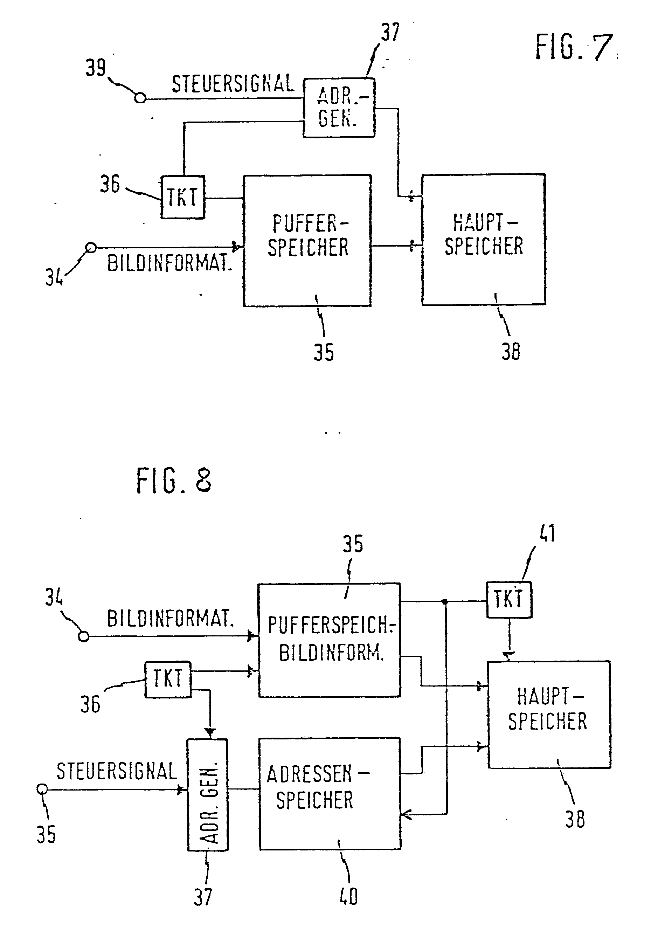

Die Fig. 7 und 8 zeigen Ausführungsformen der Auswerteinrichtungen am Orte der Speichermittel zur Entzerrung der mittels der Abtastvorrichtungen 3 aufgenommenen Bildinformationen unter Berücksichtigung etwaiger Fehlbewegungen der Abtastvorrichtung. Die über den flexiblen oder drahtlosen Informationsübertragungskanal übertragenen Bildinformationen werden an einer Klemme 34 dem Eingang eines Pufferspeichers 35 zugeführt, welcher bei der Ausführungsform nach Fig. 7 ein Kurzzeitspeicher sein kann, während er bei der Ausführungsform nach Fig. 8 eine Speicherung der Bildinformationen über eine längere Zeitdauer vornehmen kann. Die eine Augenblicksstellung der Abtastvorrichtung 3 repräsentierenden Signale der vorerwähnten Messeinrichtung 13 oder entsprechende, von den Tachometern 16a und 16b abgeleitete Signale werden zusammen mit Taktimpulsen eines Taktgenerators 36 einem Adressengenerator 37 zugeführt, welcher zur Adressierung eines Hauptspeichers 38 dient. Die Anordnung nach der Ausführungsform von Fig. 7 ist so getroffen, dass die über die Klemme 39 eingegebenen Steuersignale entsprechend der jeweiligen Stellung der Abtasteinrichtung 3 in dem Adressengenerator 37 eine solche Adressenkorrektur bewirken, dass dann, wenn aus dem Pufferspeicher 35 Bildinformationssignale in den Hauptspeicher 38 übertragen werden, die Einspeicherung an solchen Plätzen erfolgt, dass eine unmittelbare Zuordnung zu der Lage der Bildinformationen auf der Oberfläche der Vorlage 1 wiederhergestellt ist.

Die Ausführungsform nach Fig. 8 unterscheidet sich von derjenigen nach Fig. 7 dadurch, dass die vom Adressengenerator 37 abgegebenen, korrigierten Adressen nicht unmittelbar zur Adressierung des Hauptspeichers 38 verwendet werden, sondern in einem Adressenspeicher 40 abgespeichert werden, der dann unter Taktgabe durch einen weiteren Taktgeber 41 gleichzeitig mit dem Pufferspeicher 35 ausgelesen wird und zur Adressierung des Hauptspeichers 38 dient, während die Bildinformationen aus dem Pufferspeicher 35 herausgelesen werden. Diese Wirkungsweise des Systems war zuvor schon im Zusammenhang mit der Beschreibung des Ausführungsbeispiels nach Fig. 3 angedeutet worden, soweit dies die Informationsspeicherung in einer Zusatzspur der Magnetbandkassette oder in einem Parallelspeicher betraf.

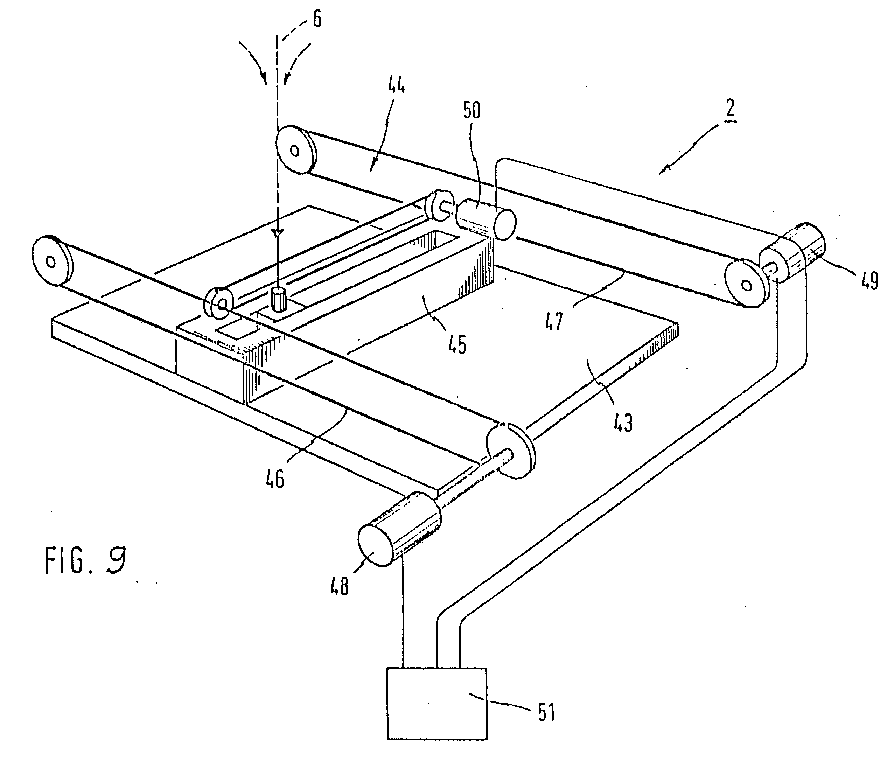

Der Hauptspeicher nach den Fig. 7 und 8 oder die zuvor erwähnten Speichermittel können die in Fig. 9 gezeigte Form haben und von einem elektrophotographischen Aufzeichnungssystem gebildet sein, in welchem ein elektrophotographisches Aufzeichnungsmaterial 43 mittels eines Aufzeichnungssystems 44 abgetastet wird. Das Aufzeichnungssystem bewirkt eine zeilenweise Belichtung des Aufzeichnungsmaterials 43 unter Fortschritt von Zeile zu Zeile, wobei die Bildinformationssignale in Gestalt elektrischer oder optischer Impulse über den flexiblen oder drahtlosen Informationsübertragungskanal 6 zugeführt werden. Handelt es sich um elektrische Signale, so erfolgt in dem Aufzeichnungssystem 44 eine Rückumwandlung in optische Signale. Ein leistenartiger Aufzeichnungskopf 45 der Aufzeichnungsvorrichtung 44 ist an seinem linken und seinem rechten Ende an jeweils gesondert antreibbaren, über Rollen geführten Drahtseilen 46 bzw. 47 befestigt, derart, dass durch unterschiedliche Beaufschlagung der Antriebsmotoren 48 bzw. 49 der leistenförmige Abtastkopf 45 in unterschiedliche Winkelstellungen relativ zu den Kanten des Formates des Aufzeichnungsmaterials 43 gebracht werden kann. Ausserdem ermöglicht ein weiterer Antrieb 50 eine Seitenverschiebung der aktiven Organe des Abtastkopfes, so dass durch entsprechende Beaufschlagung des Motors 50 ein Seitenversatz einer gesamten Abtastzeile vorgenommen werden kann.

Eine Steuereinheit 51 kann also in den Speichermitteln 2 in Abhängigkeit von Steuersignalen, welche von geeigneten Messeinrichtungen der Abtastvorrichtung 3 zugeführt werden, eine Korrektur der Aufzeichnung durch den Abtastkopf 45 auf dem Aufzeichnungsmaterial 34 entsprechend etwaigen Fehlbewegungen der Abtastvorrichtung 3 über die Vorlage 1 hinweg vornehmen. Sollte sich zeigen, dass die Steuereinheit 51 und die diese speisende Messeinrichtung der Abtastvorrichtung sowie die Antriebsmotoren 48, 49 und 50 nicht ausreichend trägheitslos und rasch arbeiten, um eine Verzerrung der Bildaufzeichnung in den Speichermitteln 2 zu verhindern, so kann es zweckmässig sein, in dem flexiblen oder drahtlosen Informationsübertragungskanal 6 bzw. 5 Verzögerungsmittel oder Puffer-Speichermittel einzusetzen.

Die aus der Videotechnik allgemein bekannten Arbeitsgeschwindigkeiten der heute zur Verfügung stehenden elektronischen Baueinheiten gestattet es, mittels der Abtastvorrichtung 3 abgetastete Bildinformationen der Oberfläche der Vorlage 1 nicht nur zeilenweise oder spaltenweise in ihrer Speicheradresse in Speichermitteln entweder der Abtastvorrichtung 3 selbst (Fig. 3) oder in Hauptspeichern der Speichermittel 2 zu korrigieren, sondern diese Korrektur bezüglich der jeweiligen Adresse der einzelnen Bildpunktinformationen vorzunehmen. Die hierzu erforderlichen Rechenvorgänge unter Verwendung von Signalen, die von Beschleunigungsmesseinrichtungen oder Geschwindigkeitsmesseinrichtungen abgeleitet werden, werden durch geeignete Mikroprozessoren durchgeführt. Schliesslich sei noch darauf hingewiesen, dass eine Entzerrung bei der Bildreproduktion gemäss nicht gezeigter Ausführungsform in zwei Schritten, und zwar zunächst in einer Koordinatenrichtung und dann nach Zwischenspeicherung der Zwischenergebnisse, in der anderen Koordinatenrichtung vorgenommen werden kann, um Abtastbewegungsfehler in den beiden Koordinatenrichtungen zu kompensieren.

Es sei noch angemerkt, dass bei den hier interessierenden Vorlagen in vorteilhafter Weise Marken oder Rasten auf diesen Vorlagen selbst zur Steuerung des Abtastvorganges nicht erforderlich sind.

**Patentansprüche**

1. Einrichtung zur Herstellung einer optisch bzw. elektronisch oder magnetisch gespeicherten Bildinformation einer im wesentlichen flächigen Vorlage (1) mit einer Abtastvorrichtung (3) zum Abtasten von aufeinanderfolgenden zeilen- oder streifenförmigen Bereichen der Vorlage und mit Speichermitteln (2) zum Speichern entsprechender Bildinformationen, wobei die Abtastvorrichtung (3) eine ortsveränderliche, auf die Vorlage (1) von Hand aufsetzbare oder über die Vorlage von Hand hinwegführbare Baueinheit ist und über die Vorlage (1) mit einem leistenförmigen Abtastkopf hinwegführbar ist, welcher einen zeilen- oder streifenförmigen Aufnahmebereich besitzt, der aufeinanderfolgend sämtliche zeilen- oder streifenförmigen Bereiche der Vorlage abtastet und wobei die Speichermittel (2) aufeinanderfolgend die Speicherung der zeilen- oder streifenförmigen Bildinformationen vornehmen, sowie mit einem an der Abtastvorrichtung (3) angeordneten Signalgenerator (15a, 16a oder 15b, 16b bzw. 24, 25, 26), welcher die Speichergeschwindigkeit für die Einspeicherung der Zeilen- oder Bildinformationen in die Speichermittel (2) bestimmende, veränderliche Bewegungen der Abtastvorrichtung (3) gegenüber der Vorlage (1) meldende Steuersignale an die Speichermittel (2) liefert, dadurch gekennzeichnet, dass an der Abtastvorrichtung (3) mindestens ein weiterer Signalgenerator (15b, 16b oder 15a, 16a bzw. 24, 25, 26) angeordnet ist, welcher eine ungleichförmige Bewegung der Abtastvorrichtung (3) gegenüber der Vorlage (1) meldende Steuersignale an die Speichermittel liefert.

2. Einrichtung nach Anspruch 1, dadurch gekennzeichnet, dass die Signalgeneratoren (15a, 16a, 15b, 16b bzw. 24, 25, 26) im Abstand längs einer zeilenförmigen Abtaststrecke der Abtastvorrichtung (3) angeordnete Geschwindigkeitsmessfühler, insbesondere durch Reibrad angetriebene Tachometer (16a, 16b) aufweisen, deren Ausgangssignale zur Erzeugung oder zur Modifizierung der Adresse für die Einspeicherung der Bildinformationen in einen Hauptspeicher (38) der Speichermittel (2) dienen.

3. Einrichtung nach Anspruch 1, dadurch gekennzeichnet, dass die Signalgeneratoren Beschleunigungs-Messfühler (24, 25, 26) enthalten, derart, dass auf der Abtastvorrichtung (3) eine Trägheitsplattform mit Bezug auf zwei Dimensionen errichtet ist, dass ferner beschleunigungsabhängige Ausgangssignale der Beschleunigungsmessfühler (24, 25, 26) zur Bestimmung der Geschwindigkeit oder der Lage der Abtastvorrichtung (3) relativ zur Vorlage (1) einfach bzw. zweifach integriert werden und dass die Einspeicherung in einen Zwischenspeicher (35) am Orte der Abtastvorrichtung (3) oder in einen Zwischenspeicher (35) oder Hauptspeicher (38) der ortsfesten Speichermittel (2) nach Adressenkorrektur unter Steuerung durch die von den Signalgeneratoren (15a, 16a; 15b, 16b bzw. 24, 25, 26) abgeleiteten Signale erfolgt.

4. Einrichtung nach Anspruch 3, dadurch gekennzeichnet, dass die Beschleunigungs-Messfühler (24, 25, 26) jeweils an einer Beryllium-Blattfeder (24) gehalterte träge Massen (25) enthalten, deren beschleunigungsabhängige Stellung durch einen Näherungsfühler (26) bestimmbar ist.

5. Einrichtung nach einem der Ansprüche 1 bis 4, dadurch gekennzeichnet, dass die Speichermittel (2) eine Kernspeichermatrix enthalten.

6. Einrichtung nach einem der Ansprüche 1 bis 4, dadurch gekennzeichnet, dass die Speichermittel (2) einen Magnetbandspeicher oder einen Magnetfolienspeicher oder einen Magnetplattenspeicher enthalten.

7. Einrichtung nach einem der Ansprüche 1 bis 4, dadurch gekennzeichnet, dass die Speichermittel (2) ein elektrophotographisches Aufzeichnungsmaterial (43) enthalten, das mittels eines abhängig von den zeilen- oder streifenförmigen Bildinformationen erregten Aufzeichnungssystems (44) beschrieben oder belichtet wird.

8. Einrichtung nach einem der Ansprüche 1 bis 7, dadurch gekennzeichnet, dass die Abtastvorrichtung (3) eine Anordnung parallel zueinander verlaufend in einer Ebene gelegener, gegeneinander optisch isolierter Lichtleiterfasern (9) enthält, welche mit ihrem einen Ende über eine ausgeleuchtete Oberfläche der Vorlage (1) hinwegführbar sind, während ihr anderes Ende jeweils zu einem optisch-elektronischen Wandlerorgan zur Erzeugung eines elektrischen Signals entsprechend der Lichtbeaufschlagung des jeweils anderen Lichtleiterfaserendes, oder unmittelbar zu einer Aufzeichnungsvorrichtung zur Belichtung eines Bildpunktbereiches eines elektrophotographischen Aufzeichnungsmaterials in einer Belichtungsstation der Speichermittel (2) führt.

**Claims**

1. Apparatus for providing optically or electronically or magnetically stored picture information from a substantially two-dimensional copy (1), comprising a scanner (3) for scanning successive line- or strip-shaped areas of the copy and storing means (2) for storing corresponding picture information, wherein said scanner (3) consists of a movable unit, which is adapted to be placed on the copy (1) by hand or to be moved over the copy by hand and includes a bar-shaped scanning head, which is movable over the copy (1) and has a line- or strip-shaped receiving portion, which successively scans all line- or strip-shaped areas of the copy, and said storing means (2) successively effect a storage of the line- or strip-shaped picture information, and a signal generator (15a, 16a or 15b, 16b, or 24, 25, 26), which is provided on the scanner (3) and supplies the memory means (2) with control signals which indicate variable movements of the scanner (3) relative to the copy (1) and control the rate at which the line or picture information is written into the memory means (2), characterized in that the scanner (3) is provided with at least one additional signal generator (15, 16b or 15a, 16a, or 24, 25, 26), which supplies the memory means with control signals indicating a non-uniform movement of the scanner (3) relative to the copy (1).

2. Apparatus according to claim 1, characterized in that the signal generators (15a, 16a, 15b, 16b or 24, 25, 26) comprise tachometers (16a, 16b), which are spaced apart along a line-shaped portion of the scanner (3) and consist particularly of tachometers (16a, 16b), which are driven by friction wheels and generate output signals for generating or modifying the address at which picture information is to be written into a main memory (38) of the memory means (2).

3. Apparatus according to claim 1, characterized in that the signal generators include acceleration sensors (24, 25, 26) and the scanner (3) is provided with an inertial platform which is effective in two dimensions, acceleration-dependent output signals of the acceleration sensors (24, 25, 26) are integrated once for a determination of the velocity of the scanner (3) relativ to the copy (1), or are integrated twice for a determination of the position of the scanner (3) relative to the copy (1), and the storage is effected in an intermediate memory (35) provided at the location of the scanner (3) or in an intermediate memory (35) or a main memory of the stationary storing means (2) after the addresses have been corrected under the control of the signals generated by the signal generators (15a, 16a; 15b, 16b or 24, 25, 26).

4. Apparatus according to claim 3, characterized in that each acceleration sensor (24, 25, 26) comprises weights (25), which are supported by respective beryllium leaf springs (24), and proximity sensors (26) for detecting the acceleration-dependent positions of each of said weights.

5. Apparatus according to any of claims 1 to 4, characterized in that the storing means (2) comprise a core matrix.

6. Apparatus according to any of claims 1 to 4, characterized in that the storing means (2) include a magnetic tape memory or a magnetic film memory or a magnetic disk memory.

7. Apparatus according to any of claims 1 to 4, characterized in that the storing means (2) include an electrophotographic recording amterial (43), which is written upon or exposed by means of a recording device (44), which is energized in dependence on the line- or strip-shaped picture information.

8. Apparatus according to any of claims 1 to 7, characterized in that the scanner (3) comprises an array of optical fibers (9), which are optically shielded from each other and extend parallel to each other in a plane, one end of each of said fibers is adapted to be moved over an illuminated surface of the copy (1), the other end of each of said fibers is connected to an optoelectronic transducer for generating an electric signal representing the light received by said one end of the optical fiber, or directly to a recording device for the exposure of a pixel area of an electrophotographic recording material in an exposing station of the storing means (2).

**Revendications**

1. Dispositif à produire une information vidéo enregistrée par voie optique ou électronique ou magnétique, d'un dessin-modèle (1) essentiellement plan, comprenant un balayeur (3) à balayer des zones linéaires ou striées successives dudit dessin-modèle, et des moyens de mémoire (2) à mémoriser des informations vidéo correspondantes, ledit balayeur (3) étant une unité modulaire mobile appropriée à être posée a main sur ledit dessin-modèle (1) ou à être passé à main audessus ledit dessin-modèle, et comprenant une tête de balayage sous forme d'une barre à passer au-dessus ledit dessin-modèle (1), ladite tête étant pourvue d'une zone d'enregistrement qui lit en succession toutes les zones linéaires ou striées dudit dessin-modèle, lesdits moyens de mémoire (2) mémorisant en succession des informations vidéo linéaires ou striées, et le dispositif comprenant également un générateur des signaux (15a, 16a ou 15b, 16b, ou 24, 25, 26) disposé au balayeur (3), pour fournir, auxdits moyens de mémoire (2), des signaux de commande déterminants la vitesse de mémorisation pour l'enregistrement des informations linéaires ou vidéo dans lesdits moyens de mémoire (2) et signalants des mouvements variables dudit balayeur par rapport audit dessin-modèle (1), caractérisé en ce qu'au moins un autre générateur des signaux (15b, 16b ou 15a, 16a, ou 24, 25, 26) est disposé audit balayeur (3), qui fournit des signaux de commande auxdits moyens de mémoire afin de signaler un mouvement varié dudit balayeur (3) par rapport audit dessin-modèle (1).

2. Dispositif selon la revendication 1, caractérisé en ce que lesdits générateurs des signaux (15a, 16a, 15b, 16b ou 24, 25, 26) sont pourvus des détecteurs de vitesse, en particulier des tachymètres (16a, 16b) entraînés par un galat de friction, disposés à distance le long d'une étendue de balayage linéaire dudit balayeur (3), dont les signaux de sortie servent de produire ou modifier l'adresse pour la mémorisation des informations vidéo dans une mémoire centrale (38) desdits moyens de mémoire.

3. Dispositif selon la revendication 1, caractérisé en ce que lesdits générateurs des signaux comprennent des capteurs accéléromètres (24, 25, 26) d'une manière qu'une plateforme inertielle soit établie, sur ledit balayeur (3), par rapport aux deux dimensions, que des signaux de sortie en fonction de l'accélération, des capteurs accéléromètres (24, 25, 26) soient également soumis à une intégration simple ou double pour la détermination de la vitesse ou la position dudit balayeur (3) par rapport audit dessin-modèle (1), et que la mémorisation soit, de plus, faite dans une mémoire temporaire (35) directement à la place dudit balayeur (3), ou dans une mémoire temporaire (35) ou mémoire centrale (38) desdits moyens de mémoire stationnaires (2), après une correction des adresses et sous la commande par les signaux dérivés desdits générateurs des signaux (15a, 16a; 15b, 16b; ou 24, 25, 26).

4. Dispositif selon la revendication 3, caractérisé en ce que lesdits capteurs accéléromètres (24, 25, 26) renferment des masses inertes (25) respectifs dont chacun est fixée à un ressort à lames en béryllium (24), leurs position faisant fonction de l'accélération étant déterminable par un détecteur de proximité (26).

5. Dispositif selon quelconque des revendications 1 à 4, caractérisé en ce que lesdits moyens de mémoire (2) renferment une matrice de tores.

6. Dispositif selon quelconque des revendications 1 à 4, caractérisé en ce que lesdits moyens de mémoire (2) renferment une mémoire de bande magnétique ou de feuille magnétique ou à disques magnétiques.

7. Dispositif selon quelconque des revendications 1 à 4, caractérisé en ce que lesdits moyens de mémoire (2) renferment une matière d'enregistrement électrophotographique (43) pour l'écriture ou l'exposition par l'intermédiaire d'un système d'enregistrement (44) activé en fonction des informations vidéo linéaires ou striées.

8. Dispositif selon quelconque des revendications 1 à 7, caractérisé en ce que ledit balayeur (3) renferme un arrangement des fibres optiques (9) parallèles l'une à l'autre, situées dans le même plan et optiquement isolées l'une de l'autre, dont les premières extrémités sont appropriées à être passées au-dessus d'une surface illuminée du dessin-modèle (1) pendant que chacune de leurs extrémités opposées est amenée à un élément transducteur optique-électronique afin de produire un signal électrique en fonction de la lumière admise à l'autre extrémité respective de ladite fibre optique, ou est amenée directement à un dispositif d'enregistrement pour l'exposition d'une zone d'éléments d'image d'un matériel d'enregistrement électrophotographique dans une station d'exposition desdits moyens de mémoire (2).

FIG. 1

FIG. 2

0110923

FIG. 3

13

FIG. 4

FIG. 5

FIG. 6

0110923

FIG. 7

STEUERSIGNAL

39

37 ADR.-GEN.

36 TKT

34 BILDINFORMAT.

35 PUFFER-SPEICHER

38 HAUPT-SPEICHER

FIG. 8

34 BILDINFORMAT.

35 PUFFERSPEICH.-BILDINFORM.

36 TKT

41 TKT

STEUERSIGNAL

35

37 ADR. GEN.

40 ADRESSEN-SPEICHER

38 HAUPT-SPEICHER

19

0110923

21

FIG. 9